# EUROPEAN PATENT SPECIFICATION

(11) **EP 1 793 383 B1**
(45) Date of publication and mention of the grant of the patent: **18.03.2009**
(21) Application number: 06024557.8
(22) Date of filing: 27.11.2006
(51) Int. Cl.: G11B 33/06, H04N 5/225

(54) **Electronic apparatus and image capturing apparatus**
Elektronisches Gerät und Bilderfassungsvorrichtung
Appareil électronique et dispositif d'acquisition d'image

(30) Priority: 05.12.2005 JP 2005350743
(43) Date of publication of application: 06.06.2007
(73) Proprietor: Sony Corporation, Tokyo (JP)
(72) Inventor: Hotta, Shinji, c/o Sony EMCS Corporation, Tokyo (JP); Shiibashi, Sadato, c/o Sony EMCS Corporation, Tokyo (JP); Yamamura, Masanori, c/o Sony EMCS Corporation, Tokyo (JP); Inagaki, Masato, c/o Sony EMCS Corporation, Tokyo (JP)
(74) Representative: Müller - Hoffmann & Partner

(56) References cited:
- EP-A2- 0 438 071
- JP-A- 2005 184 668
- US-A1- 5 822 001
- US-A1- 2002 044 768
- US-A1- 2003 184 670

## Description

### BACKGROUND OF THE INVENTION

### 1. Field of the Invention

The present invention relates to an electronic apparatus and an image capturing apparatus.

### 2. Description of Related Art

In the recent years, an electronic apparatus became known using a disk-shaped recording medium such as an optical disk as a recording medium for recording and/or reproducing image data and audio data.

An electronic apparatus of this type has been proposed, which has an exterior casing and is provided with an accommodating section serving to detachably accommodate the disk-shaped recording medium, and a recording/reproducing section that performs recording and/or reproducing of data to/from the disk-shaped recording medium accommodated in the accommodating section. The accommodating section is provided with an open/close cover swingably through a hinge so as to cover or uncover the accommodating section, and a lock mechanism is employed to produce a locked state adapted to hold the cover in a closed position and an unlock state adapted to allow the cover to swing from the closed position to an open position (see Japanese Patent Application Publication Numbers JP2005-184668, JP2005-182877).

In the above-described electronic apparatus, the lock mechanism is configured to include an engaging claw located at a cover portion that is on an outer circumference of the cover and at the side opposite to the hinge, and an engagement section incorporated in the accommodating section and engaged with or disengaged from the engaging claw by sliding by an actuator such as a plunger.

### SUMMARY OF THE INVENTION

For electronic apparatus of this type, efforts have been made to realize a reduction in thickness of the exterior casing and/or the cover because of demands for reductions in apparatus size and weight.

Thus, a structure in which the cover is locked in one position like the above-described technology has recognized disadvantages when the holding of the cover is secured in the closed position.

Accordingly, it is desirable to provide an electronic apparatus and an image capturing apparatus, which is capable of providing secure closing of an open/close cover, while being aimed at achieving reductions in apparatus size and weight. The present invention has been undertaken in view of the above-described circumstances.

According to an embodiment of the present invention, there is provided an electronic apparatus. The electronic apparatus includes: an exterior casing; an accommodating section provided in the exterior casing and serving to detachably accommodate a disk-shaped recording medium; a recording/reproducing section that performs recording and/or reproducing of data to/from the disk-shaped recording medium accommodated in the accommodating section; an open/close cover provided at the exterior casing so as to be swingable between a closed position to cover the accommodating section and an open position to uncover the accommodating section; and a lock mechanism configured to produce a locked state in which the cover is held in the closed position and an unlock state in which the cover is allowed to swing from the closed position to the open position. The cover is provided with an arm on inside surface thereof, the arm extending through a center of the cover to mutually facing position at outer circumference of the cover. The arm has, at its both ends in a lengthwise direction, two locking claws serving to produce the locked state by being releasably coupled with the accommodating section in two portions thereof, which are located away from an axial swing center of the cover; and the lock mechanism is configured to include the arm and the two locking claws.

Further, according to another embodiment of the present invention, there is provided an image capturing apparatus. The image capturing apparatus includes an exterior casing; an optical image capturing system located at an inside of the exterior casing so as to face a front surface of the exterior casing; an imager device incorporated in the exterior casing and operative to capture an object image guided through the optical image capturing system; a recording section for making, to the disk-shaped recording medium, recording of image data captured by the imager device; an accommodating section located at right side of the exterior casing and serving to detachably accommodate the disk-shaped recording medium; an open/close cover located at the right side of the exterior casing and serving to cover or uncover the accommodating section; and a lock mechanism configured to produce a locked state in which the cover is held in a closed position and an unlock state in which the cover is allowed to swing from the closed position to an open position. The cover is provided with an arm on inside surface thereof, the arm extending through a center of the cover to mutually facing position at outer circumference of the cover. The arm has, at its both ends in a lengthwise direction, two locking claws serving to produce the locked state by being releasably coupled with the accommodating section in two portions thereof, which are located away from an axial swing center of the cover; and the lock mechanism is configured to include the arm and the two locking claws.

According to the present invention, the use of single arm enables the cover to be locked in two positions, thereby providing secure closing of the cover while being aimed at achieving the reductions in apparatus size and weight, and providing advantageous structure in reduction in thickness of the exterior casing and/or the cover.

### BRIEF DESCRIPTION OF THE DRAWINGS

The above-described features and advantages of the present invention will become more apparent from the following description of the embodiments of the invention taken in conjunction with the accompanying drawings, in which:
FIG. 1 is a perspective view showing a configuration of an image capturing apparatus according to one embodiment;
FIG. 2 is a perspective view showing a configuration of the image capturing apparatus according to one embodiment;
FIG. 3 is a perspective view showing a configuration of the image capturing apparatus according to one embodiment;
FIG. 4 is a perspective view showing a configuration of the image capturing apparatus according to one embodiment;
FIG. 5 is a perspective view showing a configuration of the image capturing apparatus according to one embodiment;
FIG. 6 is a perspective view showing a configuration of the image capturing apparatus according to one embodiment;
FIG. 7 is a right side view of the image capturing apparatus;
FIG. 8 is a perspective view of a portion where a grip belt is secured to a casing;
FIG. 9 is a perspective view of a portion where the grip belt is secured to a cover;
FIG. 10 is a block diagram showing a configuration of a control system of the image capturing apparatus;
FIG. 11 is a plan view showing an inside surface of the cover;
FIG. 12 is a perspective view showing a lock mechanism in a locked state;
FIG. 13 is a perspective view showing the lock mechanism in an intermediate state;
FIG. 14 is a perspective view showing the lock mechanism in an unlock state;
FIG. 15 illustrates the locked state of the lock mechanism;
FIG. 16 illustrates the intermediate state of the lock mechanism; and
FIG. 17 illustrates the unlock state of the lock mechanism.

### DETAILED DESCRIPTION OF EMBODIMENTS

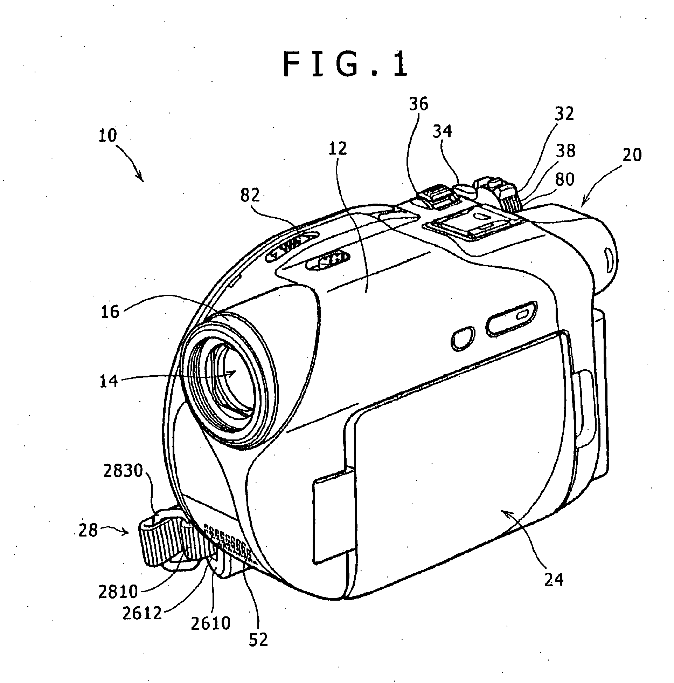

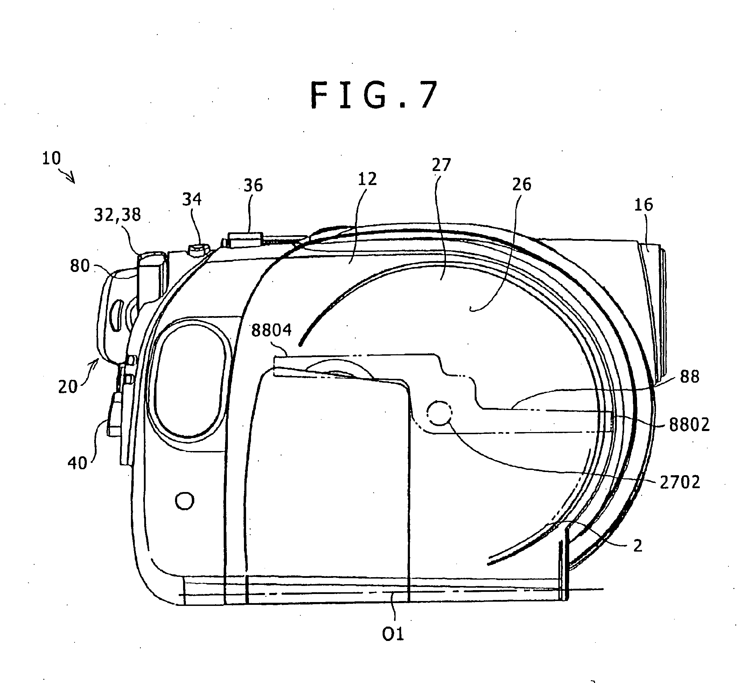

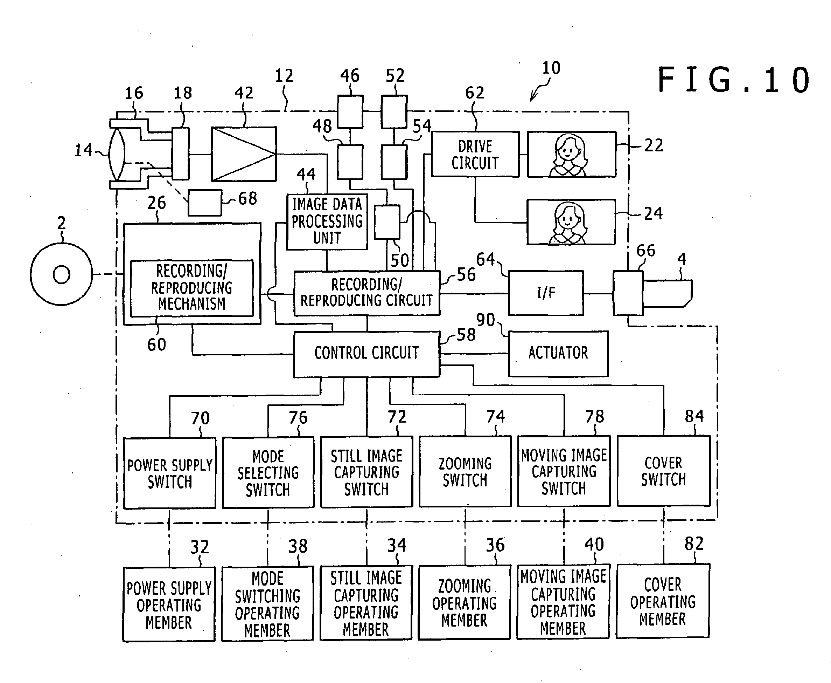

FIGS. 1 to 6 are perspective views respectively showing a configuration of an image capturing apparatus 10 according to one embodiment. FIG. 7 is a right side view of the image capturing apparatus 10, and FIG. 10 is a block diagram showing a configuration of a control system of the image capturing apparatus 10.

As shown in FIGS. 1 to 6, the embodiment is described with an exemplary case where an electronic apparatus is in form of the image capturing apparatus 10, which is specified as a video camera.

The image capturing apparatus 10 has an exterior casing 12 forming an exterior and having a front-back length and a up-down height that are sized greater than a right-left width. It should be noted that terms of "left and right" in the present specification are assumed to be directions given with the image capturing apparatus 10 seen from the rear. Further, in an optical axis direction of an optical system, a direction to an object side is referred to as forward, and that to an imager device side is referred to as rearward.

In the following description, the direction between "front (forward) and back (rearward)" will be referred to as "longitudinal" direction, the "up-down (height)" direction as "vertical", and the "right and left direction" as "lateral" direction.

The casing 12 is provided at its upper front with a lens barrel 16 integrated with an optical image capturing system 14, and the lens barrel extends from a front surface and faces forward. The optical image capturing system 14 has a zoom lens, and capable of providing a continuously variable zoom ratio.

The casing 12 accommodates in its interior a device such as an imager device 18 (See FIG. 10) for capturing an object image guided through the optical image capturing system 14.

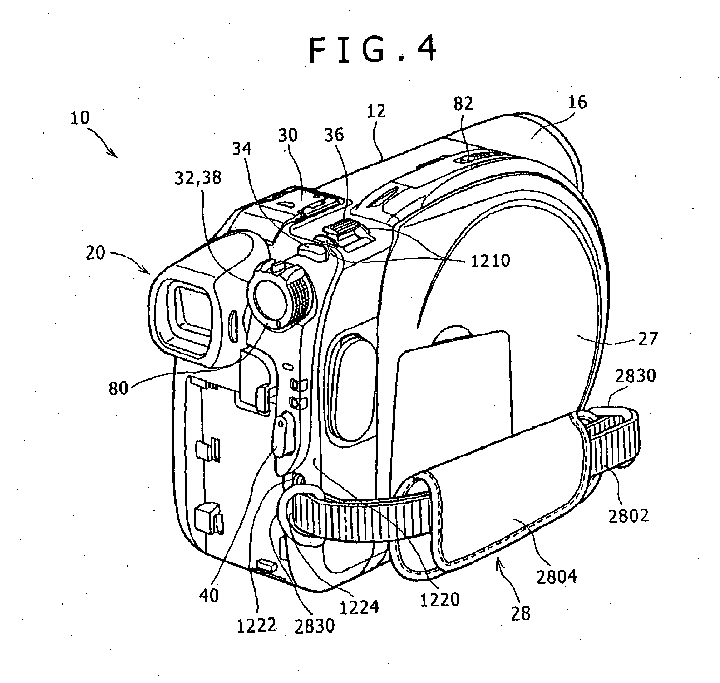

As shown in FIG. 4, the casing 12 is provided at its upper rear with a viewfinder (or an electronic finder) 20 for visual confirmation of the object image captured by the imager device 18, and the viewfinder extends from a rear surface and faces rearward. The viewfinder 20 has a display panel 22(See FIG. 10) including, for instance, a liquid crystal display incorporated in the casing 12, and capable of providing the visual confirmation of an image displayed on the display panel 22.

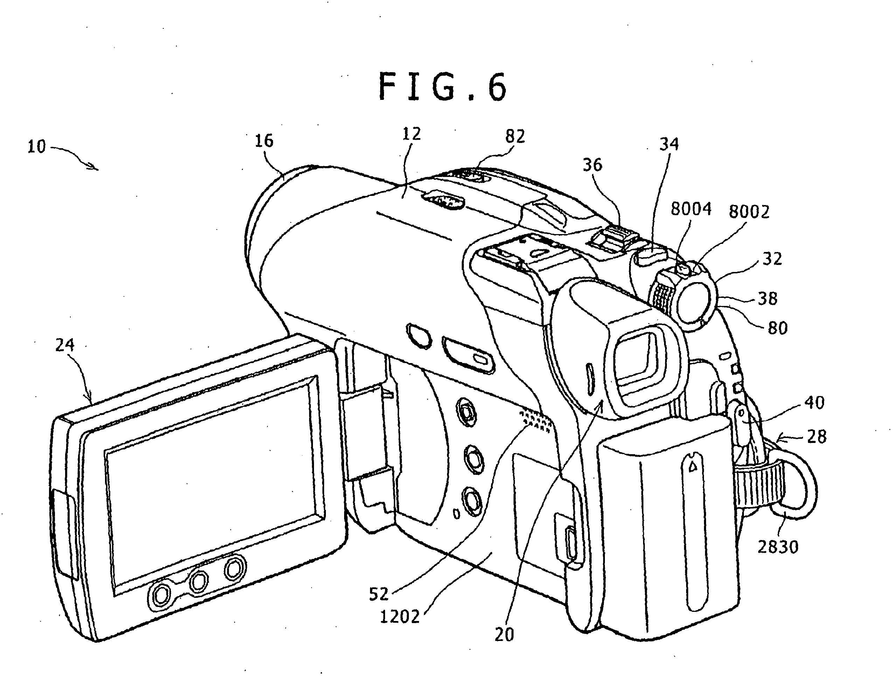

As shown in FIGS. 1 and 6, the casing 12 is provided at its left side with a swingable display panel 24 including, for instance, a liquid crystal display for displaying an image such as the object image captured by the imager device 18. Upon closing, the display panel 24 is received in a concave accommodating section 1202. It should be noted that there is provided a speaker 52 (See FIG. 10) on a bottom wall of the concave accommodating section 1202.

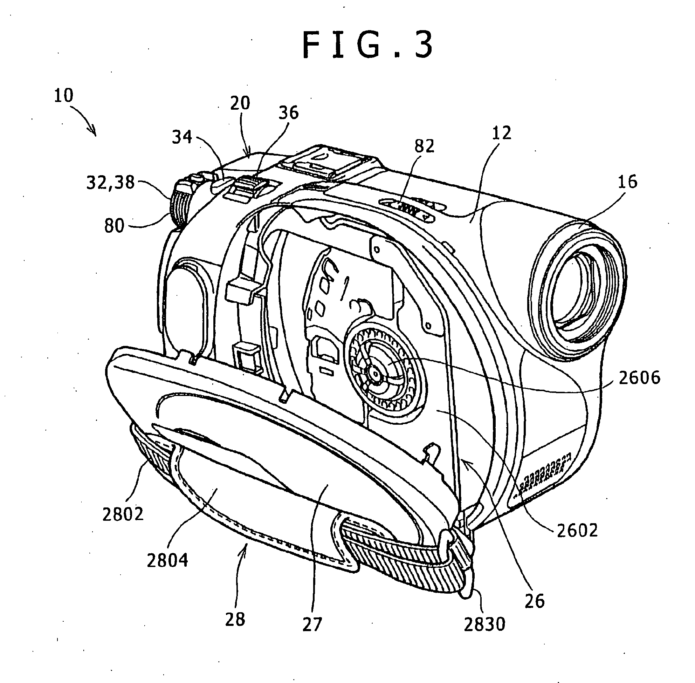

As shown in FIGS. 3 and 4, the casing 12 is provided at its right side with an accommodating section 26 serving to detachably mount a disk-shaped recording medium 2 (See FIG. 10) for recording image data and audio data.

As shown in FIG. 3, the accommodating section 26 has a space 2602 serving to accommodate the disk-shaped recording medium 2, a turntable 2606 located in the space 2602 and forming a mounting section, a recording/reproducing mechanism 60, and an open/close cover 27 for covering the space 2602. An outside surface of the cover 27 serves to form a right side surface of the casing 12.

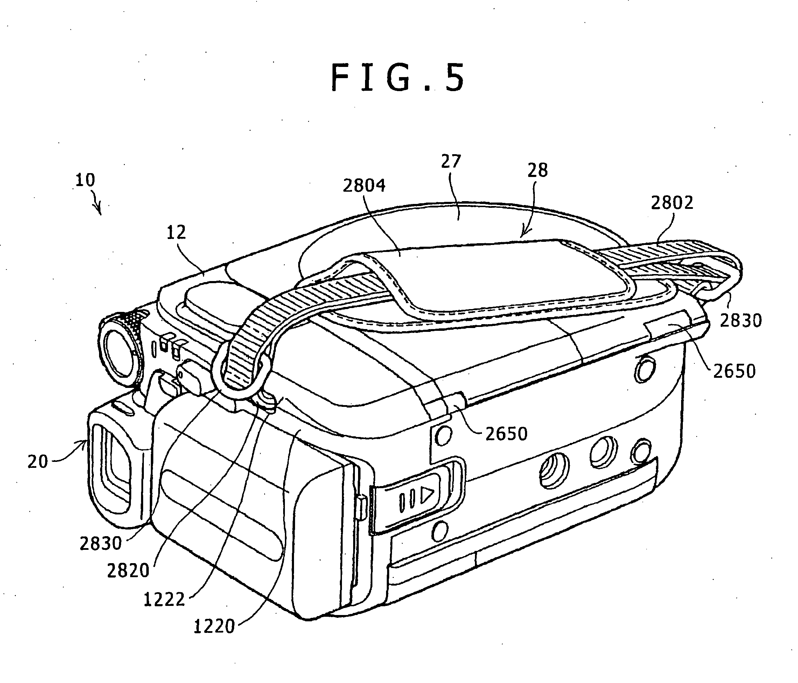

The cover 27 is provided such that it's upper end is swingable toward an outside of the casing 12 with lower-end hinges 2650 (See FIG. 5) as a fulcrum (or an axial swing center). The cover 27 is swung in a range between a closed position shown in FIG. 1 and an open position shown in FIG. 3, and ensures that the disk-shaped recording medium 2 is inserted and removed in the open position.

Further, the cover 27 is configured such that the cover 27 can be locked in the closed position by a lock mechanism 86 described later, and further, is allowed to swing from the closed position to the open position when unlocked.

The turntable 2606 is located on the bottom wall of the space 2602, and configured such that the turntable 2606 is turned by a spindle motor (not shown in the figure) and the disk-shaped recording medium 2 is driven to rotate together with the turntable 2606 when a center hole of the disk-shaped recording medium 2 is held in engagement with the turntable 2606.

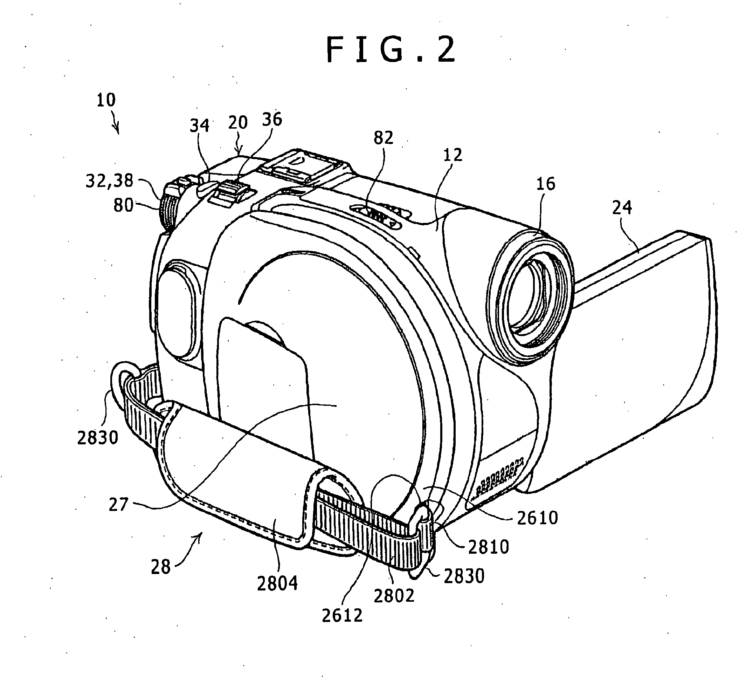

As shown in FIGS. 2 to 5, the casing 12 is provided on its right side surface with a longitudinally extending grip belt 28. The grip belt 28 longitudinally extends at the outside of the cover 27 that allows a user's right hand palm is inserted between the grip belt and the outside surface of the cover 27.

As shown in FIG. 4, the casing 12 is provided on its upper rear surface with a hot shoe 30 serving to detachably mount accessories such as a video light and a flashlight.

As shown in FIG. 1, the casing 12 is provided on its lower front surface with a microphone 46 (See FIG. 10) for collecting sounds.

As shown in FIGS. 1 to 4 and 6, the image capturing apparatus 10 is provided with, as operating members for performing various functions associated with image capturing, a power supply operating member 32, a still image capturing operating member 34, a zooming operating member 36, a mode switching operating member 38, a moving image capturing operating member 40 and a cover operating member 82, etc.

The power supply operating member 32, the still image capturing operating member 34, the zooming operating member 36, the mode switching operating member 38 and the cover operating member 82 are all located on the upper surface of the casing 12.

The moving image capturing operating member 40 is in a position that is in the vertical middle of the rear surface of the casing 12 and close to the right side surface thereof.

The power supply operating member 32 is to on/off control a power supply of the image capturing apparatus 10. The still image capturing operating member 34 is to effect still image capturing with the imager device 18.

The zooming operating member 36 is to vary the zoom ratio of the optical image capturing system 14. The mode switching operating member 38 is to switch between a still image capturing mode and a moving image capturing mode.

The moving image capturing operating member 40 is to start or stop moving image capturing. The cover operating member 40 is to open the cover 27.

As shown in FIG. 10, the image capturing apparatus 10 has a video signal amplifying circuit 42, an image data processing section 44, the microphone 46, a microphone amplifying circuit 48, an audio data processing circuit 50, the speaker 52, an output amplifying circuit 54, a recording/reproducing circuit 56, a control circuit 58, the recording/reproducing mechanism 60, a drive circuit 62, an interface circuit 64, a memory card slot 66 and a zooming drive section 68, etc.

The image capturing apparatus 10 also has a power supply switch 70, a still image capturing switch 72, a zooming switch 74, a mode selecting switch 76, a moving image capturing switch 78 and a cover switch 84.

An imaging signal generated by the imager device 18 is amplified by the video signal amplifying circuit 42 before being fed to the image data processing section 44.

The image data processing section 44 performs prescribed signal processing to the imaging signal to generate moving image data and still image data, which are then fed to the recording/reproducing circuit 56.

An audio signal picked up by the microphone 46 is amplified by the microphone amplifying circuit 48, and is then subject to prescribed signal processing by the audio data processing circuit 50 to generate audio data, which is then fed to the recording/reproducing circuit 56.

The recording/reproducing circuit 56 feeds, to the recording/reproducing mechanism 60 in the accommodating section 26 under control of the control circuit 58, the moving and the still image data fed from the image data processing section 44 and/or the audio data fed from the audio data processing circuit 50.

The recording/reproducing mechanism 60 is to record the moving and the still image data and/or the audio data in the disk-shaped recording medium 2 specified as a recording medium, and forming a recording/reproducing section (or a recording section) described in claims of the present invention. Specifically, the recording/reproducing mechanism 60 is to effect recording of the data by emitting light beam to a recording layer of the disk-shaped recording medium 2 using a well-known optical pickup, and to effect reproducing of the data by detecting reflected light beam out of the light beam emitted to the recording layer of the disk-shaped recording medium 2 using the optical pickup.

While the embodiment employs the optical disk such as DVD-R as the disk-shaped recording medium 2, it will be appreciated that the disk-shaped recording medium may be any optical disk other than the DVD-R, or alternatively, a magneto-optical disk.

The recording/reproducing circuit 56 also records, in the memory card 4 specified as the installed recording medium in the memory card slot 66 through the interface circuit 64, the moving and the still image data fed from the image data processing section 44 and/or the audio data fed from the audio data processing circuit 50.

The recording/reproducing circuit 56 also causes display of an image by feeding, to display panels 22, 24 through the drive circuit 62, the moving and the still image data fed from the image data processing section 44.

Further, the recording/reproducing circuit 56 causes the display of the image by feeding, to the display panels 22, 24 through the drive circuit 62, the moving and the still image data fed from the memory card 4 through the interface circuit 64, and causes audio output by feeding, to the speaker 52 through the output amplifying circuit 54, the audio data fed from the memory card 4 through the interface circuit 64.

Further, the recording/reproducing circuit 56 causes the display of the image by feeding, to the display panels 22, 24 through the drive circuit 52, the moving and the still image data reproduced from the disk-shaped recording medium 2 by the recording/reproducing mechanism 60, and causes the audio output by feeding, to the speaker 52 through the output amplifying circuit 54, the audio data reproduced from the disk-shaped recording medium 2 by the recording/reproducing mechanism 60.

The power supply switch 70 is activated through an operation of the power supply operating member 32, causing the control circuit 58 operative to on/off control the power supply of the image capturing apparatus 10 based on an action of the power supply switch 70.

The still image capturing switch 72 is activated through the operation of the still image capturing operating member 34. The control circuit 58 causes to record the still image data in the disk-shaped recording medium 2 by sending a command based on the action of the still image capturing switch 72 to the image data processing section 44 and the recording/reproducing circuit 56 so as that the still image data, which is fed from the image data processing section 44, is fed from the image data processing section 44 to the recording/reproducing mechanism 60. In other words, the still image capturing operating member 34 may function as a shutter button.

The zooming switch 74 is activated through the operation of the zooming operating member 36, causing the control circuit 58 operative to give a command, based on the action of the zooming switch 74, to the zooming drive section 68 for varying the zoom ratio of the optical image capturing system 14 by shifting the zoom lens of the optical image capturing system 14.

The mode selecting switch 76 is activated through the operation of the mode switching operating member 38, causing the control circuit 58 operative to give a command, based on the action of the mode selecting switch 76, to the image data processing section 44 for switching between the moving image capturing mode adapted to generate the moving image data by the image data processing section 44 and the still image capturing mode adapted to generate the still image data by the image data processing section 44.

It should be noted that the moving image capturing mode causes the moving image data generated by the image data processing section 44 to be recorded in the disk-shaped recording medium 2 or the memory card 4 through the recording/reproducing circuit 56, while the still image capturing mode causes the still image data generated by the image data processing section 44 to be recorded in the disk-shaped recording medium 2 or the memory card 4 through the recording/reproducing circuit 56.

The moving image capturing switch 78 is activated through the operation of the moving image capturing operating member 40, causing the control circuit 58 operative to give a start or a stop to recording of the moving image data based on the action of the moving image capturing switch 78. Specifically, the control circuit 58 is operative to give a command, based on the action of the moving image capturing switch 78, to the image data processing section 44 and the recording/reproducing circuit 56 for giving the start or the stop to an operation of recording the moving image data in the disk-shaped recording medium by feeding, from the image data processing section 44 to the recording/reproducing mechanism 60 through the recording/reproducing circuit 56, the moving image data, which is fed to the image data processing section 44. In other words, the moving image capturing operating member 40 may function as an image capturing start or stop operating member.

The cover switch 84 is activated through the operation of the cover operating member 82, causing the control circuit 58 operative to activate an actuator 90 described later by feeding a current to the actuator 90 based on the action of the cover switch 84, causing the lock mechanism 86 of the cover 27 to be driven. Specifically, the control circuit 58 is operative to lock or unlock the cover 27 through the lock mechanism 86 based on the action of the cover switch 84, ensuring that the data is prevented from being damaged by an incomplete stop of the recording operation upon careless opening of the cover 27 in the process of giving the recording to the disk-shaped recording medium 2. It should be noted that the embodiment provides the cover operating member 82 in the form of a longitudinally slidable member.

As shown in FIG. 4, according to the embodiment, three operating members for performing different functions associated with the image capturing, i.e., the power supply operating member 32, the still image capturing operating member 34 and the zooming operating member 36 are in a longitudinally linear juxtaposed arrangement in positions that are at a right side of the upper rear surface of the casing 12 and within a range adaptable to effect operations with a user's right hand forefinger, with the front surface of the casing 12 turned forward, and with the right side of the casing 12 gripped with user's right hand fingers except the thumb.

As shown in FIG. 4, according to the embodiment, the longitudinally extending grip belt 28 is located on the right side surface of the casing 12. When the right side of the casing 12 is gripped with the user's right hand palm and fingers except the thumb, the user's right hand fingers except the thumb may be inserted in a space between the right side surface of the casing 12 and the grip belt 28.

As shown in FIGS. 4 and 6, according to the embodiment, the power supply operating member 32, the still image capturing operating member 34 and the zooming operating member 36 are located at the rear of and above the accommodating section 26.

As shown in FIG. 4 and 6, according to the embodiment, the viewfinder 20 is located at the left side of an arrangement section of the power supply operating member 32, the still image capturing operating member 34 and the zooming operating member 36 so as to face to the rear surface of the casing 12.

As shown in FIGS. 4 and 6, according to the embodiment, among the power supply operating member 32, the still image capturing operating member 34 and the zooming operating member 36, the power supply operating member 32 is located in a rearmost position, and the zooming operating member 36 is in a foremost position.

As shown in FIG. 4, the still image capturing operating member 34 is formed of a pushbutton, and depressing the still image capturing operating member 34 causes the still image data to be recorded in the disk-shaped recording medium 2 or the memory card 4.

The zooming operating member 36 is formed of a swing lever swingable about a longitudinally extending imaginary axis. The zooming operating member 36 is normally kept forcing in its neutral position, and may provide a reduced zoom ratio (or toward a wide-angle side) as being swung toward a widthwise center of the casing 12, or an increased zoom ratio (toward a telephoto side) as being swung outward.

According to the embodiment, the zooming operating member 36 is provided respectively at its front and the rear with laterally extending partition walls 1210 that are adapted to provide a more certain operation of the zooming operating member 36.

The power supply operating member 32 and the mode switching operating member 38 are formed of a single disk-shaped swing member 80 swingable about the longitudinally extending imaginary axis.

A rear end face of the swing member 80 is located longitudinally at the approximately same level as the rear end face of the casing 12, and is exposed to the outside rearward through the casing 12.

On/off control of the power supply is provided through an operation of swinging the swing member 80 between a first swing position and a second swing position. More specifically, the power supply may be turned off when the swing member is in the first swing position, while being turned on when being in the second swing position.

Switching between the still image capturing mode and the moving image capturing mode is alternately provided for each operation of swinging the swing member 80 between the second swing position and a third swing position located opposite to the first swing position with placing the second swing position between, and the swing member 80 is normally kept forcing in the second swing position.

As shown in FIG. 6, according to the embodiment, the swing member 80 has, on its outer circumference, a recess 8002 having, on its bottom surface, a depressive lock button 8004. Furthermore, depressing the lock button 8004 when the swing member 80 is in the first swing position may cause the swing member 80 to swing from the first swing position to the second swing position.

As shown in FIG. 4, according to the embodiment, the casing 12 has the moving image capturing operating member 40 in a position that is below the power supply operating member 32 and within the range adaptable to effect the operations with the user's right hand thumb, with the front surface of the casing 12 turned forward, and with the right side of the casing gripped with the user's right hand palm and fingers except the thumb.

The moving image capturing operating member 40 is formed of a pushbutton, and causes the start or the stop of the recording of the moving image data in the disk-shaped recording medium 2 or the memory card 4 for each operation of depressing the moving image capturing operating member 40.

The above-described arrangements of the power supply operating member 32, the still image capturing operating member 34 and the zooming operating member 36 may provide the following advantages.

The power supply operating member 32, the still image capturing operating member 34 and the zooming operating member 36 are in the longitudinally linear juxtaposed arrangement in the positions that are at the right side of the upper rear surface of the casing 12 and within the range adaptable to effect the operations with the user's right hand forefinger, with the front surface of the casing 12 turned forward, and with the right side of the casing 12 gripped with the user's right hand palm and fingers except the thumb, thereby advantageously permitting all the three operating members to be operated smoothly and easily with the user's right hand forefinger, with the casing 12 gripped, and hence, making it easier to operate.

The grip belt 28 is now described in detail.

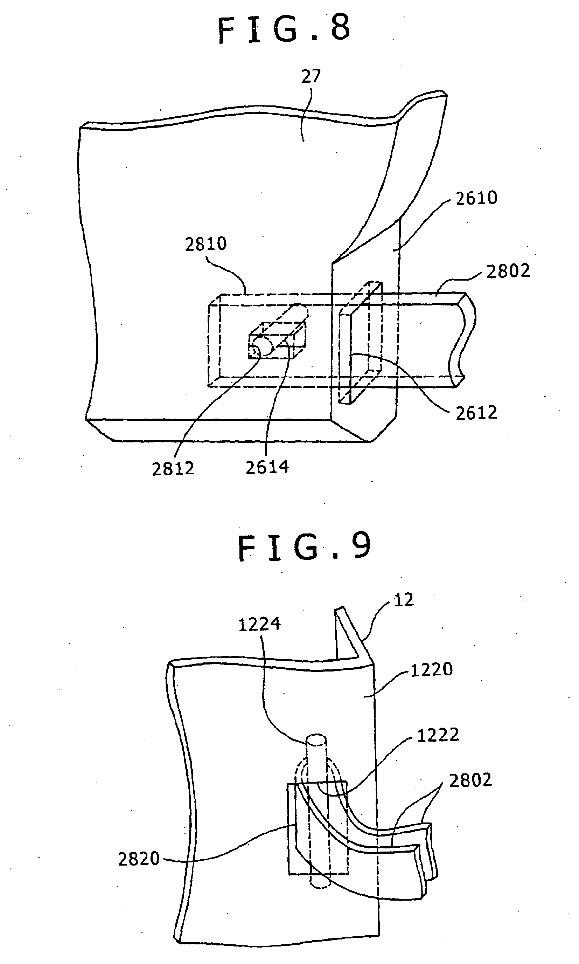

FIG. 8 is a perspective view of a portion where the grip belt 28 is secured to the casing 12, and FIG. 9 is a perspective view of a portion where the grip belt 28 is secured to the cover 27.

As shown in FIGS. 2 to 5, the grip belt 28 has a longitudinally extending belt body 2802 at the outside of the cover 27, and a back contact pad 2804 serving to cover a mid-portion of the belt body 2802.

The belt body 2802 is bendable, and is in form of a belt-like knitted product consisting of synthetic resin fibers.

The back contact pad 2804 is formed of a flexible material such as cloth and synthetic leather, and has a width greater than that of the belt body 2802 so as to ensure that a pad portion makes contact with a user's hand back.

The belt body 2802 is provided at its mid-portion with the back contact pad 2804, such that after the user's right hand palm is inserted between the belt body 2802 and the outside surface of the cover 27, a portion of the back contact pad 2804 is conditioned to make contact with the user's right hand back, permitting a user's impression of fitting with the right side of the casing 12 and the outside surface of the cover 27 to be surely given.

As shown in FIGS. 2, 3 and 4, one longitudinal end of the grip belt 28 is secured to a longitudinal end of the casing 12, while the other end is secured to the cover 27 at its longitudinal end located longitudinally opposite to the longitudinal end of the casing 12.

As shown in FIGS. 1, 2 and 8, according to the embodiment, a front end 2810 of the belt body 2802 is secured to a lower front end of the cover 27.

Specifically, a forwardly facing wall section 2610 located at the lower front end of the cover 27 has an opening 2612 permitting insertion of the front end 2810 of the belt body 2802, so that the front end 2810 of the belt body 2802 may be secured to the lower front end of the cover 27 in such a manner that an engaging projection 2614 protuberantly presented on the inside surface of the cover 27 is engaged with a hole 2812 in the front end 2810 of the belt body 2802 inserted into the opening 2612.

It should be noted that according to the embodiment, the lower front end of the cover 27 where the wall section 2610 is located is in a position longitudinally shifted rearward from a vertical center of the front surface of the casing 12, as shown in FIGS. 1 and 8.

As shown in FIGS. 4, 5 and 9, a rear end 2820 of the grip belt 28 is secured to a lower rear end of the casing 12.

Specifically, the casing 12 has a rearward facing rear surface 1220 having, in its lower-positioned wall section close to the right side, an opening 1222 permitting the insertion of the rear end 2820 of the belt body 2802, so that the rear end 2820 of the belt body 2802 may be secured to the inside of the lower rear end of the casing 12 in such a manner that the rear end 2820 of the belt body 2802 inserted into the opening 1222 is caught by an engaging shaft 1224 provided on the inside of the rear surface 1220. A belt portion close to the rear end 2820 of the grip belt 28 projects rearward from the rear surface 1220 through the opening 1222.

It should be noted that the belt body 2802 is provided at its portions close to the openings 2612 and 1222 with fittings 2830 and ensures that a length of the belt body 2802 can be adjusted between the fittings 2830.

The configurations of the grip belt 28 may provide the following advantages.
The cover 27 is arranged swingably with the lower end hinges 2650 (See FIG. 5) as the fulcrum, and the front end 2810 of the grip belt 28 is secured to the front end of the cover 27, with the rear end 2820 secured to the rear end of the casing 12, so that the front end 2810 of the grip belt 28 may be moved along with the front end 2820 of the cover 27 in either casing where the cover 27 is opened or closed.

Thus, the grip belt 28 causes no hindrance to any opening or closing action of the cover 27, thereby advantageously permitting easy and smooth replacements of the disk-shaped recording medium 2 with respect to the accommodating section 26 without needing to locate the grip belt 28 off a locus of movement of the cover 27 differently from the related technology, and hence, making it easier to operate.

In particular, the front end 2810 of the grip belt 28 is secured to the lower front end of the cover 27, with the rear end 2820 secured to the lower rear end of the casing 12, thereby further advantageously making it easier to operate.

When opening or closing the cover 27, the front end 2810 of the grip belt 28 is moved along with the front end of the cover 27, thereby also permitting the opening or closing action of the cover 27 to be effected even with the user's right hand put to remain inserted between the grip belt 28 and the cover 27.

Accordingly, it becomes possible to effect the replacements of the disk-shaped recording medium with a user's left hand, with the image capturing apparatus 10 held with the user's right hand put to remain inserted between the grip belt 28 and the outside surface of the cover 27 without needing to mount the image capturing apparatus 10 on a table etc., thereby advantageously permitting easy and speedy replacements of the disk-shaped recording medium 2, and hence, enabling the image capturing without missing a chance.

The front end 2810 of the grip belt 28 is secured to the cover 27 at its lower front end located in the position longitudinally shifted rearward from the vertical center of the front surface of the casing 12, such that no longitudinal space is needed even if the fittings 2830 are located at the lower front end of the cover 27, thereby advantageously realizing compactness of the image capturing apparatus 10.

The front end 2810 of the grip belt 28 is secured to the cover 27 at its lower front end close to the fulcrum of the cover 27, so that a force acting on the cover 27 through the front end 2810 of the grip belt 28 may be applied to a cover portion close to the fulcrum when the user's right hand is in the space between the grip belt 28 and the outside surface of the cover 27, thereby advantageously realizing a reduction in thickness of the cover 27, and hence, the compactness of the image capturing apparatus 10.

The grip belt 28 is arranged such that its portion close to the rear end 2820 projects rearward from the rear surface 1220, such that even if a span of the user's right hand in the space between the grip belt 28 and the outside surface of the cover 27 is so large that a hand portion close to the rear of the user's right hand may protrude rearward from the rear surface 1220, it is allowable to lengthen the belt portion close to the rear end 2820 of the grip belt 28 so as to be in close contact with the user's right hand portion protruding rearward from the rear surface 1220, thereby advantageously providing the user's impression of fitting of one's right hand with the grip belt 28 and the casing 12 to be surely given. In other words, the rear end 2820 of the grip belt 28 may be secured to a casing portion close to the rear of the right side surface of the casing 12 and not the outer surface 1220 of the casing 12. In such a case, there may be some disadvantages for not providing the user's fully satisfactory impression of fitting of one's right hand with the grip belt 28 and the casing 12, because the rear end 2820 of the grip belt 28 is secured with its rearward bent position after once protruding rightward if the hand portion close to the rear of the user's right hand protrudes rearward from the rear surface 1220. However, the embodiment may advantageously eliminate or alleviate the above-described conditions.

While the embodiment has been described as related to the case where the front end 2810 of the grip belt 28 is secured to the front end of the cover 27, with the rear end 2820 of the grip belt 28 secured to the rear end of the casing 12, it will be appreciated that the front end 2810 of the grip belt 28 may alternatively be secured to the front end of the casing 12, with the rear end 2820 of the grip belt 28 secured to the rear end of the cover 27.

While the embodiment has been also described as related to the case where the front end 2810 of the grip belt 28 is secured to the lower front end of the cover 27, with the rear end 2820 of the grip belt 28 secured to the lower rear end of the casing 12, it will be appreciated that the positions where the front end 2810 and the rear end 2820 of the grip belt 28 are to be secured may alternatively be changed depending on the shape and the size of the casing 12.

While the embodiment has been also described as related to the case where the cover 27 is provided such that its upper end is swingable toward the outside of the casing 12 with the lower end as the fulcrum, it will be appreciated that when the cover 27 is modified such that its front end is swingable toward the outside of the casing 12 with the rear end as the fulcrum, similar effects as the embodiment may be also obtained by securing the front end 2810 of the grip belt 28 to the front end of the cover 27, and the rear end 2820 of the grip belt 28 to the rear end of the casing 12.

The lock mechanism 86 is now described.

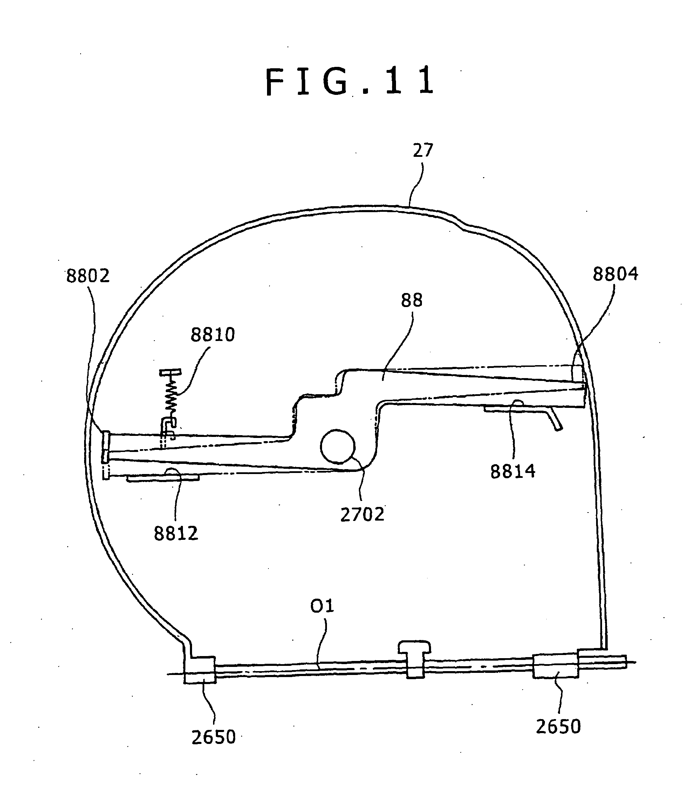

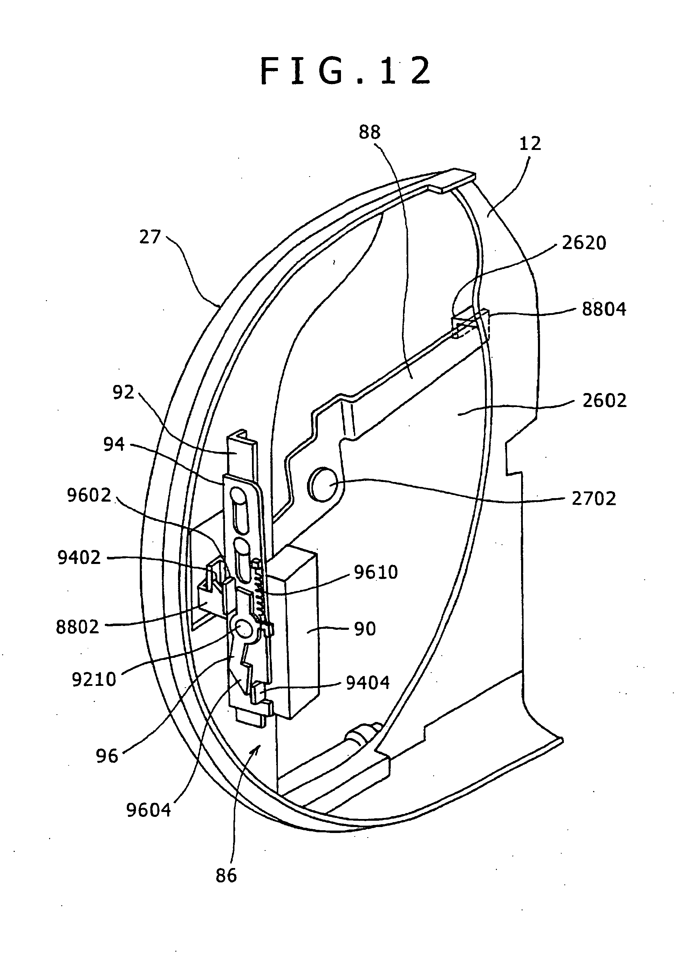

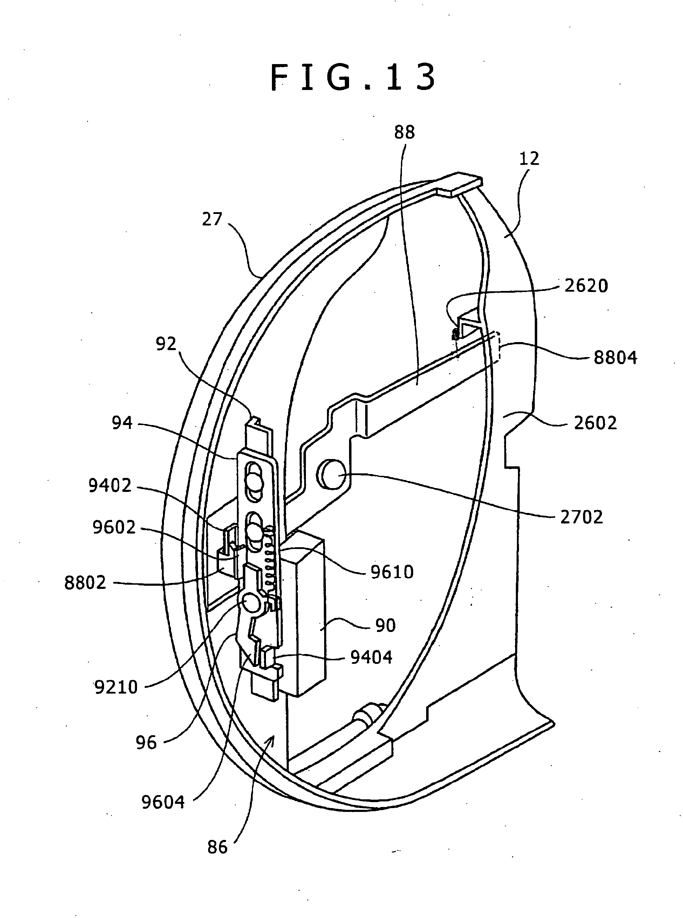

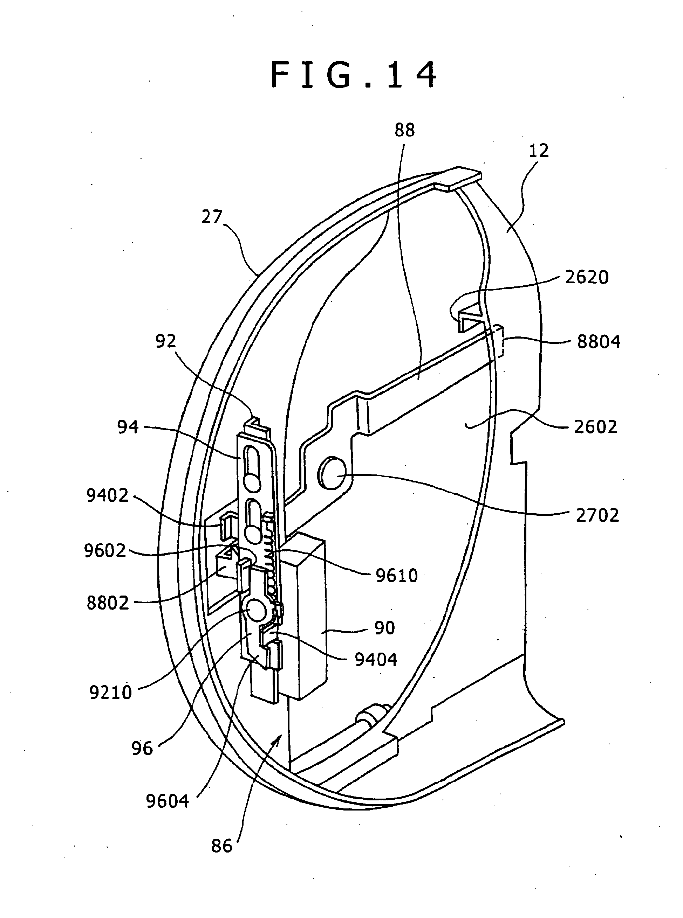

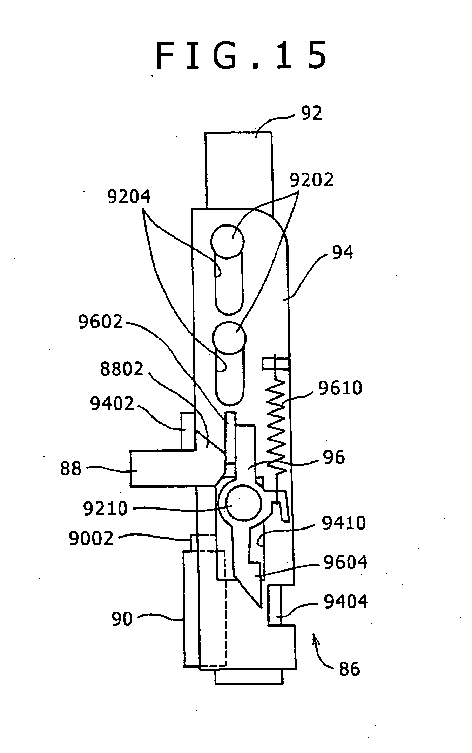

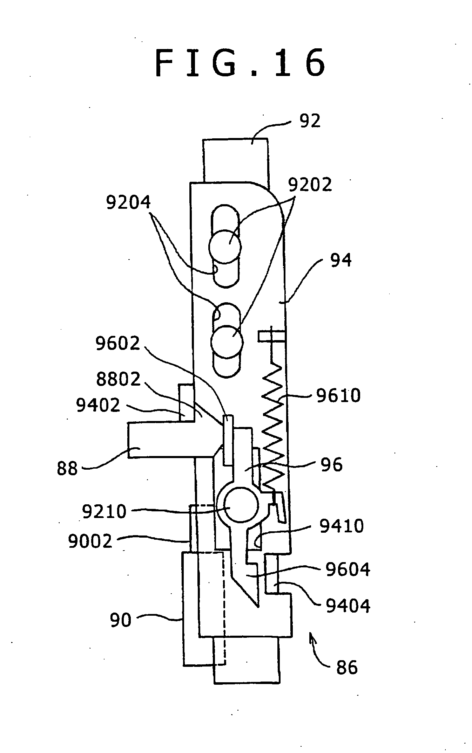

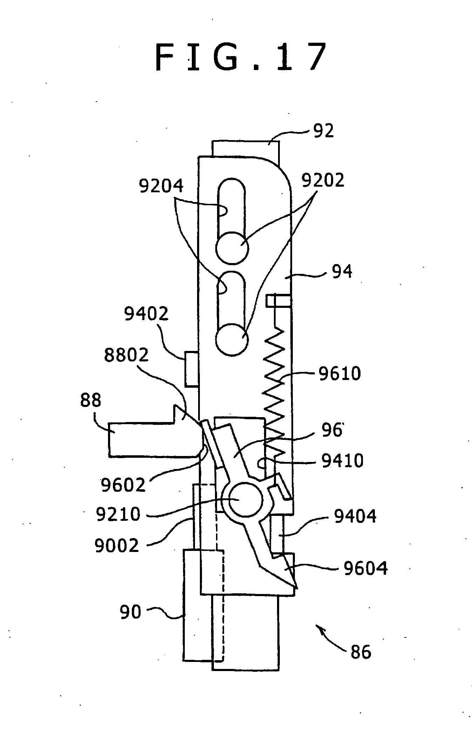

FIG. 11 is a plan view showing an inside surface of the cover 27. FIG. 12 is a perspective view showing the lock mechanism 86 in a locked state, FIG. 13 is a perspective view showing the lock mechanism 86 in an intermediate state, and FIG. 14 is a perspective view showing the lock mechanism 86 in an unlock state. FIG. 15 illustrates the locked state of the lock mechanism 86, FIG. 16 illustrates the intermediate state of the lock mechanism 86, and FIG. 17 illustrates the unlock state of the lock mechanism 86.

The lock mechanism 86 serves to produce the locked state adapted to hold the cover 27 in the closed position as shown in FIGS. 12 and 15 and the unlock state adapted to allow the cover to swing from the closed position to the open position as shown in FIGS. 14 and 17.

As shown in FIG. 7, the cover 27 has a profile larger than that of the disk-shaped recording medium 2, and is provided on its inside surface with an arm 88 extending through the center of the cover 27 to mutually opposed outer circumference portions of the cover 27. The arm 88 has, at its opposite ends in a lengthwise direction, two locking claws serving to produce the locked state by being releasably coupled with the accommodating section 26 in its two portions located away from an axial swing center O1 of the cover 27. The lock mechanism 86 is configured to include the arm 88 and the two locking claws.

The arm 88 is arranged so as to extend along the inside surface of the cover 27. In the locked state adapted to hold the cover 27 in the closed position, the arm 88 extends in a diameter direction of the disk-shaped recording medium 2 accommodated in the accommodating section 26.

In the locked state adapted to hold the cover 27 in the closed position, the arm 88 also longitudinally extends in parallel to the axial swing center O1.

As shown in FIG. 12, there is provided the actuator 90 serving to cause the lock mechanism 86 to produce the locked state and the unlock state.

More specifically, as shown in FIGS. 11 and 12, a mid-portion of the arm 88 is supported swingably through an axis 2702 in the center of the inside surface of the cover 27. One longitudinal end of the arm 88 is formed as a first locking claw 8802, while the other longitudinal end of the arm 88 is formed as a second locking claw 8804.

The first locking claw 8802 is formed as bended at one longitudinal end of the arm 88 in a direction away from the inside surface of the cover 27.

As shown in FIG. 11, the arm 88 is provided at its portion close to the first locking claw 8802 with a spring 8810 serving to force the first locking claw 8802 and a first stopper 8812 in such a manner that the spring and the first stopper sandwich the arm portion close to the first locking claw 8802. The arm 88 is also provided at its portion close to the second locking claw 8804 with a second stopper 8814 serving to prevent the arm 88 from being swung by an elastic force of the spring 8810.

As shown in FIG. 12, the actuator 90 is located on the inside surface of the casing 12 so as to be close to the accommodating section 26. According to the embodiment, the actuator 90 includes, for instance, a motor and a speed reduction mechanism, and is operative to project or withdraw a movable projection 9002 so as to obtain its linear reciprocating motions as shown in FIGS. 15 to 17 by feeding a current to the motor through the control circuit 58. The actuator 90 is activated through the operation of the cover operating member 82. It will be appreciated that various types of well-known actuators such as a solenoid and a plunger may be employed as the actuator 90.

Further, the casing 12 is also provided on it's inside surface with a guide plate 92 adjacent to the actuator 90.

As shown in FIGS. 12 and 15, the guide plate 92 supports a slide member 94 in a linearly reciprocate manner through engagement between an axis 9202 and a long slot 9204, and the slide member 94 is coupled with the movable projection 9002.

The slide member 94 has a first projection 9402 adaptable to engage the first locking claw 8802, and a second projection 9404 adaptable to engage a swing piece 96 described later. It should be noted that the first projection 9402 corresponds to an engagement section in claims of the present invention.

It should be noted that the second locking claw 8804 is releasably engaged with the projection 2620 provided on the wall surface of the accommodating section 26.

The guide plate 92 is provided with the swing piece 96, in addition to the slide member 94. The swing piece 96 has its longitudinal mid-portion supported swingably through an axis 9210, which is supported with the guide plate 92 through a long slot 9410 of the slide member 94. One longitudinal end of the swing piece 96 forms a first engagement section 9602, while the other longitudinal end of the swing piece 96 forms a second engagement section 9604.

There is provided a spring 9610 between the swing piece 96 and the slide member 94, and the swing piece 96 is kept being forced in a direction of swinging with using the axis 9210 as the fulcrum by the elastic force of the spring 9610.

The operation is now described.

For the convenience of descriptions, the operation is described as related to the case where the cover 27 is in the locked state upon its closing, an operation for the insertion or removal of the disk-shaped recording medium 2 is started with the locked state.

As shown in FIG. 15, when the cover 27 is in the locked state upon its closing, the actuator 90 is not activated yet, so that the slide member 94 is forced toward the hinges 2650 by the spring 9610.

Subsequently, the arm 88 is forced in a turning direction in which the first locking claw 8802 comes closer to the hinges 2650, so that the arm portion close to the first locking claw 8802 is held in contact with the first stopper 8812 as shown by an imaginary line in FIG. 11.

Further, as shown in FIGS. 12 and 15, the first projection 9402 of the slide member 94 is in engagement with the first locking claw 8802 of the arm 88, while the second locking claw 8804 of the arm 88 is in engagement with the projection 2620 (which corresponds to an engagement wall in claims of the present invention) so that the cover 27 is prevented from being swung away from the accommodating section 26, thereby ensuring that the cover 27 is held in the closed position. This swing state of the arm 88 is referred to as a first swing state.

In the first swing state, driving the actuator 90 through the operation of the cover operating member 82 causes the movable projection 9002 to be projected, and the slide member 94 is moved away from the hinges 2650 as shown in FIGS. 13 and 16.

As shown in FIG. 11, the arm 88 is kept urged by the spring 8810 in the direction in which the first locking claw 8802 is away from the hinges 2650, and following the movement of the slide member 94, the arm portion close to the first locking claw 8802 is moved until the arm portion close to the second locking claw 8804 comes into contact with the second stopper 8814, thereby obtaining a swing position shown by a solid line in FIG. 11. This swing state of the arm 88 is referred to as a second swing state.

As shown in FIGS. 13 and 16, in the second swing state, the second locking claw 8804 is disengaged from the projection 2620, and the first projection 9402 is engaged with the first locking claw 8802, permitting the lock mechanism 86 to produce an intermediate state between the locked state and the unlock state.

As the slide member 94 is further moved away from the hinges 2650, the first projection 9402 is disengaged from the first locking claw 8802 as shown in FIGS. 14 and 17.

That is, with the arm 88 constrained to maintain the second swing state, the second locking claw 8804 is disengaged from the projection 2620, and the first locking claw 8802 is disengaged from the first projection 9402, permitting the unlock state to be produced.

Furthermore, the swing piece 96 is kept being forced by the spring 9610. Accordingly, when the first projection 9402 is disengaged from the first locking claw 8802, the first engagement section 9602 of the swing piece 96 causes the first locking claw 8802 to be pushed out away from the accommodating section 26, permitting the cover 27 to be opened so far as a prescribed amount of opening.

It should be noted that engagement of the second projection 9404 of the slide member 94 with the second engagement section 9604 of the swing piece 96 is adapted to prevent the slide member 94 from being moved toward the hinges 2650.

It should be noted that after the current is fed to the actuator 90 and the movable projection 9002 is projected, the feed of the current to the actuator 90 is stopped. However, the movable projection 9002 is held in its projected position by the engagement of the second projection 9404 of the slide member 94 with the second engagement section 9604 of the swing piece 96.

Once the cover 27 is opened so far as the prescribed amount of opening, the user may open the cover 27 up to its open position for the insertion or removal of the disk-shaped recording medium 2.

When the cover 27 is closed after completion of insertion or removal of the disk-shaped recording medium 2, the first locking claw 8802 comes into engagement with the first engagement section 9602 of the swing piece 96 to swing the swing piece 96, causing the second projection 9404 of the slide member 94 to be disengaged from the second engagement section 9604 of the swing piece 96.

Accordingly, the slide member 94 is moved toward the hinges 2650 by an urging force of the spring 9610 until the first projection 9402 of the slide member 92 is engaged with the first locking claw 8802 of the arm 88, permitting the lock mechanism 86 to produce the intermediate state with the arm 88 constrained to maintain the second swing state.

Furthermore, as the slide member 94 is further moved toward the hinges 2650 by the urging force of the spring 9610, the arm 88 is swung until its portion close to the first locking claw 8802 makes contact with the first stopper 8812 as shown by a chain double-dashed line in FIG. 11, permitting the arm 88 to enter the first swing state. Furthermore, as shown in FIGS. 12 and 15, with the second locking claw 8804 of the arm 88 engaged with the projection 2620, the locked state is produced by the engagement of the first projection 9402 with the first locking claw 8802 and by the engagement of the second locking claw 8804 with the projection 2620 so that the cover 27 may be prevented from being swung away from the accommodating section 26, thereby ensuring that the cover 27 is held in the closed position.

It should be noted that the movement of the slide member 94 toward the hinges 2650 by the urging force of the spring 9610 causes the movable projection 9002 of the actuator 90, to which no current is fed, to change to its withdrawn position as shown in FIG. 15.

According to the embodiment as described the above, use of the single arm 88 enables the cover 27 to be locked in two positions, thereby providing secure closing of the cover 27, and hence, the reduction in thickness of the cover 27 and/or the casing 12, while being aimed at achieving the reductions in apparatus size and weight.

Further, the locking of the cover 27 in the two positions by the arm 88 provides a strengthened locked state of the cover 27 in the closed position and enables to sufficiently resist forces received from the grip belt 28, thereby enabling one end of the grip belt 28 to be secured to the cover 27 like the embodiment. Accordingly, it is possible to advantageously permit easy and smooth replacements of the disk-shaped recording medium 2 with respect to the accommodating section 26, thereby making it easier to operate.

Furthermore, the arm 88 extends along the inside surface of the cover 27 so as to be arranged in a dead space on the inside surface of the cover 27, thereby advantageously permitting a space for the arrangement of the arm 88 to be minimized, and hence, realizing the reduction in apparatus size.

Furthermore, in the locked state holding the cover 27 in the closed position, the arm 88 extends not only in the diameter direction of the disk-shaped recording medium 2 accommodated in the accommodating section 26, but also longitudinally in parallel to the axial swing center O1 of the hinges 2650, thereby advantageously permitting the cover 27 to be securely held in the closed position.

Furthermore, according to the embodiment, the actuator 90 operative to produce the locked state and the unlock state through the lock mechanism 86 is installed in not the cover 27 but the accommodating section 26 (or the casing 12), thereby advantageously realizing the reduction in thickness and the compactness of the cover 27 without any complication, as compared with a case where the actuator 90 is installed to the cover 27.

Furthermore, according to the embodiment, the lock mechanism 86 provides, between the locked state and the unlock state, the intermediate state in which the second locking claw 8804 is disengaged from the projection 2620 and the first projection 9402 is engaged with the first locking claw 8802, permitting the locked state and the unlock state to be produced in step-by-step manner. Thus, the locked state and the unlock state may be produced simply and reliably, thereby advantageously realizing the smooth operation of inserting or removing the disk-shaped recording medium 2.

While the embodiment has been described as related to the case where the actuator 90 is operative to drive the lock mechanism 86, it will be appreciated that the present invention is not limited to use of the actuator 90. Alternatively, an operating button and/or a link mechanism etc. may be employed to drive the lock mechanism 86.

Further, while the embodiment has been described as related to the case where the lock mechanism 86 is configured to include the guide plate 92, the slide member 94 and the swing piece 96 etc., it will be appreciated that the present invention is not limited to the structure of the embodiment, and that various types of well-known structures may be adopted in the mechanism for swinging the arm 88 so as to provide the engagement or disengagement between the first and the second locking claws 8802, 8804 and the accommodating section 26. Specifically, while the present applicant has already suggested an image capturing apparatus (See Japanese Patent Application Publication Number JP2005-182877) including a lock mechanism having a guide plate, a slide member, a swing piece and locking claws and operative to produce the locked state and the unlock state of the cover by engagement or disengagement between the locking claws and the slide member, it will be appreciated that similar structures as the guide plate, the slide member and the swing piece in the lock mechanism may be adopted in the lock mechanism 86 of the present invention.

Furthermore, while the embodiment has been described as related to the case where the electronic apparatus is in form of the image capturing apparatus, it will be appreciated that the present invention is not limited to the image capturing apparatus, and that wide applications to other types of electronic apparatuses using the detachably mounted disk-shaped recording medium, such as mobile CD players, DVD players, or CD drive apparatuses or DVD drive apparatuses are possible.

It should be understood by those skilled in the art that various modifications, combinations, sub-combinations and alterations may occur depending on design requirements and other factors insofar as they are within the scope of the appended claims.

## Claims

1. An electronic apparatus (10) comprising:
an exterior casing (12);
an accommodating section (26) provided in the exterior casing and serving to detachably accommodate a disk-shaped recording medium (2);
a recording/reproducing section (56, 60) that performs recording and/or reproducing of data to/from the disk-shaped recording medium accommodated in the accommodating section:
an open/close cover (27) provided in the exterior casing so as to be swingable between a closed position to cover the accommodating section and an open position to uncover the accommodating section; and
a lock mechanism (86) configured to produce a locked state in which the cover is held in the closed position and an unlock state in which the cover is allowed to swing from the closed position to the open position;
wherein the cover is provided with an arm (88) on an inside surface thereof, the arm extending through a center of the cover to mutually facing position at outer circumference of the cover:
wherein the arm has, at both ends of the arm in a lengthwise direction, two locking claws (8802, 8804) serving to produce the locked state by being releasably coupled with the accommodating section in two portions thereof, which are located away from an axial swing center of the cover; and
wherein the lock mechanism is configured to include the arm and the two locking claws.

2. The electronic apparatus according to claim 1, wherein:
the arm extends along the inside surface of the cover.

3. The electronic apparatus according to claim 1, wherein:
in the locked state holding the cover in the closed position, the arm extends in a diameter direction of the disk-shaped recording medium accommodated in the accommodating section.

4. The electronic apparatus according to claim 1, wherein:
in the locked state holding the cover in the closed position, the arm extends in parallel to the axial swing center of the cover.

5. The electronic apparatus according to claim 1, wherein:
the exterior casing is provided with an actuator (90) that causes the lock mechanism to produce the locked state and the unlock state by swinging the arm.

6. The electronic apparatus according to claim 1, wherein:
the locking claws releasably coupled with the accommodating section in its two portions located away from the axial swing center (2702) of the cover in the locked state are a first locking claw and a second locking claw:
the exterior casing is provided with an actuator that causes the lock mechanism to produce the locked state and the unlock state by swinging the arm and engaging/disengaging an engagement section with/from the first locking claw;
the locked state is produced, in a first swing state of the arm, by engagement of the engagement section with the first locking claw (8802) and by engagement of an engagement wall provided in the exterior casing with the second locking claw (8804): and
the unlock state is produced, in a second swing state of the arm, by disengagement of the first locking claw from the engagement section and by disengagement of the second locking claw from the engagement wall provided in the exterior casing.

7. The electronic apparatus according to claim 1, wherein:
the locking claws releasably coupled with the accommodating section in its two portions located away from the axial swing center of the cover in the locked state are a first locking claw and a second locking claw;
the exterior casing is provided with an actuator that causes the lock mechanism to produce the locked state and the unlock state by swinging the arm and engaging/disengaging an engagement section with/from the first locking claw;
the locked state is produced, in a first swing state of the arm, by engagement of the engagement section with the first locking claw and by engagement of an engagement wall provided in the exterior casing with the second locking claw:
the unlock state is produced, in a second swing state of the arm, by disengagement of the first locking claw from the engagement section and by disengagement of the second locking claw from the engagement wall provided in the exterior casing: and
an intermediate state between the locked state and the unlock state is produced, in the second swing state of the arm, by the engagement of the engagement section with the first locking claw and by disengagement of the second locking claw from the engagement wall provided in the exterior casing.

8. The electronic apparatus according to claim 6 or 7, wherein:
the arm is provided with a forcing means (8810) of forcing the arm into the second swing state, and a stopper (8814) serving to limit the second swing state of the arm by making contact with the arm.

9. The electronic apparatus according to at least one of the preceding claims, wherein this apparatus is an image capturing apparatus.

10. The image capturing apparatus according to claim 9, wherein:
the axial swing center extends in a front-back direction; and
the arm extends in the front-back direction in the locked state holding the cover in the closed position.

11. The image capturing apparatus according to claim 9, further comprising:
a grip belt (28) disposed in an outer surface of the open/close cover (27) and extending in a front-back direction, thereby allowing a right hand palm to insert between the grip belt and an outside surface of the cover outside thereof; and
one end of the grip belt in the front-back direction is secured to one end of the exterior casing in the front-back direction, and the other end of the grip belt is secured to the cover at the other end in the front-back direction.

12. The image capturing apparatus according to claim 11, wherein:
a front end of the grip belt is secured to a front end of the cover, with a rear end thereof secured to a rear end of the exterior casing.

13. The image capturing apparatus according to claim 11, wherein:
a front end of the grip belt is secured to a lower front end of the cover, with a rear end thereof secured to a lower rear end of the exterior casing.

14. The image capturing apparatus according to claim 9, wherein:
the exterior casing has a front-back length and a vertical height that are sized greater than a right-left width.

## Patentansprüche

1. Elektronische Vorrichtung (10), mit:
einem äußeren Gehäuse (12);
einem Aufnahmeabschnitt (26), der in dem äußeren Gehäuse vorgesehen ist und dazu dient, ein plattenförmiges Aufzeichnungsmedium (2) entnehmbar aufzunehmen;
einem Aufzeichnungs-/Wiedergabeabschnitt (56, 60), der das Aufzeichnen und/oder Wiedergeben von Daten auf das/von dem plattenförmigen Aufzeichnungsmedium, das in dem Aufnahmeabschnitt aufgenommen ist, ausführt;
einer sich öffnenden/schließenden Abdeckung (27), die in dem äußeren Gehäuse vorgesehen ist und zwischen einer geschlossenen Position, in der der Aufnahmeabschnitt abgedeckt ist, und einer geöffneten Position, in der der Aufnahmeabschnitt nicht abgedeckt ist, schwenkbar ist; und
einem Verriegelungsmechanismus (86), der konfiguriert ist, um einen verriegelten Zustand zu erzeugen, in dem die Abdeckung in der geschlossenen Position gehalten wird, und um einen entriegelten Zustand zu erzeugen, in dem zugelassen ist, dass die Abdeckung aus der geschlossenen Position in die geöffnete Position schwenkt;
wobei die Abdeckung auf einer Innenoberfläche mit einem Arm (88) versehen ist, der sich durch ein Zentrum der Abdeckung zu einer gegenüberliegenden Position am äußeren Umfang der Abdeckung erstreckt;
wobei der Arm an beiden Enden des Arms in Längsrichtung zwei Verriegelungsklauen (8802, 8804) besitzt, die dazu dienen, den verriegelten Zustand zu erzeugen, indem sie mit dem Aufnahmeabschnitt in zwei Abschnitten hiervon, die sich in einem Abstand von einem axialen Schwenkzentrum der Abdeckung befinden, lösbar gekoppelt werden; und
wobei der Verriegelungsmechanismus so konfiguriert ist, dass er den Arm und die zwei Verriegelungsklauen enthält.

2. Elektronische Vorrichtung nach Anspruch 1, wobei:
der Arm sich längs der Innenoberfläche der Abdeckung erstreckt.

3. Elektronische Vorrichtung nach Anspruch 1, wobei:
der Arm im verriegelten Zustand, in dem die Abdeckung in der geschlossenen Position gehalten wird, sich in einer Durchmesserrichtung des in dem Aufnahmeabschnitt aufgenommenen plattenförmigen Aufzeichnungsmediums erstreckt.

4. Elektronische Vorrichtung nach Anspruch 1, wobei:
der Arm im verriegelten Zustand, in dem die Abdeckung in der geschlossenen Position gehalten wird, sich parallel zu dem axialen Schwenkzentrum der Abdeckung erstreckt.

5. Elektronische Vorrichtung nach Anspruch 1, wobei:
das äußere Gehäuse mit einem Betätigungselement (90) versehen ist, das den Verriegelungsmechanismus dazu veranlasst, den verriegelten Zustand und den entriegelten Zustand durch Schwenken des Arms zu erzeugen.

6. Elektronische Vorrichtung nach Anspruch 1, wobei:
die Verriegelungsklauen, die mit dem Aufnahmeabschnitt in seinen zwei Abschnitten, die sich im verriegelten Zustand in einem Abstand von dem axialen Schwenkzentrum (2702) der Abdeckung befinden, lösbar gekoppelt sind, eine erste Verriegelungsklaue und eine zweite Verriegelungsklaue sind;
das äußere Gehäuse mit einem Betätigungselement versehen ist, das den Verriegelungsmechanismus dazu veranlasst, den verriegelten Zustand und den entriegelten Zustand durch Schwenken des Arms und durch Herstellen eines Eingriffs bzw. durch Lösen des Eingriffs eines Eingriffabschnitts mit bzw. von der ersten Verriegelungsklaue zu erzeugen;
der verriegelte Zustand in einem ersten Schwenkzustand des Arms durch Herstellen eines Eingriffs des Eingriffsabschnitts mit der ersten Verriegelungsklaue (8802) und durch Herstellen eines Eingriffs einer in dem äußeren Gehäuse vorgesehenen Eingriffwand mit der zweiten Verriegelungsklaue (8804) erzeugt wird; und
der entriegelte Zustand in einem zweiten Schwenkzustand des Arms durch Lösen des Eingriffs der ersten Verriegelungsklaue von dem Eingriffabschnitt und durch Lösen des Eingriffs der zweiten Verriegelungsklaue von der in dem äußeren Gehäuse vorgesehenen Eingriffwand erzeugt wird.

7. Elektronische Vorrichtung nach Anspruch 1, wobei:
die Verriegelungsklauen, die mit dem Aufnahmeabschnitt in seinen beiden Abschnitten, die sich im verriegelten Zustand in einem Abstand von dem axialen Schwenkzentrum der Abdeckung befinden, lösbar gekoppelt sind, eine erste Verriegelungsklaue und eine zweite Verriegelungsklaue sind;
das äußere Gehäuse mit einem Betätigungselement versehen ist, das den Verriegelungsmechanismus dazu veranlasst, den verriegelten Zustand und den entriegelten Zustand durch Schwenken des Arms und durch Herstellen eines Eingriffs bzw. durch Lösen des Eingriffs eines Eingriffabschnitts mit bzw. von der ersten Verriegelungsklaue zu erzeugen;
der verriegelte Zustand in einem ersten Schwenkzustand des Arms durch Herstellen eines Eingriffs des Eingriffabschnitts mit der ersten Verriegelungsklaue und durch Herstellen eines Eingriffs einer in dem äußeren Gehäuse vorgesehenen Eingriffwand mit der zweiten Verriegelungsklaue erzeugt wird;
der entriegelte Zustand in einem zweiten Schwenkzustand des Arms durch Lösen des Eingriffs der ersten Verriegelungsklaue von dem Eingriffabschnitt und durch Lösen des Eingriffs der zweiten Verriegelungsklaue von der in dem äußeren Gehäuse vorgesehenen Eingriffwand erzeugt wird; und
ein Zwischenzustand zwischen dem verriegelten Zustand und dem entriegelten Zustand in dem zweiten Schwenkzustand des Arms durch Herstellen des Eingriffs des Eingriffabschnitts mit der ersten Verriegelungsklaue und durch Lösen des Eingriffs der zweiten Verriegelungsklaue von der in dem äußeren Gehäuse vorgesehenen Eingriffwand erzeugt wird.

8. Elektronische Vorrichtung nach Anspruch 6 oder 7, wobei:
der Arm versehen ist mit einem Kraftausübungsmittel (8810), um den Arm in den zweiten Schwenkzustand zu drängen, und mit einem Anschlag (8814), der dazu dient, den zweiten Schwenkzustand des Arms durch Herstellen eines Kontakts mit dem Arm zu begrenzen.

9. Elektronische Vorrichtung nach wenigstens einem der vorhergehenden Ansprüche, wobei diese Vorrichtung eine Bildaufnahmevorrichtung ist.

10. Bildaufnahmevorrichtung nach Anspruch 9, wobei:
das axiale Schwenkzentrum sich in einer Vorwärts/Rückwärts-Richtung erstreckt; und
der Arm sich im verriegelten Zustand, in dem die Abdeckung in der geschlossenen Position gehalten wird, in der Vorwärts/Rückwärts-Richtung erstreckt.

11. Bilderzeugungsvorrichtung nach Anspruch 9, ferner mit:
einem Griffriemen (28), der in einer äußeren Oberfläche der sich öffnenden/schließenden Abdeckung (27) angeordnet ist und sich in einer Vorwärts/Rückwärts-Richtung erstreckt, um zuzulassen, dass ein rechter Handballen zwischen dem Griffriemen und einer äußeren Oberfläche der Abdeckung außerhalb hiervon eingeführt wird;
wobei ein Ende des Griffriemens in Vorwärts/Rückwärtsrichtung an einem Ende des äußeren Gehäuses in der Vorwärts/Rückwärtsrichtung befestigt ist und das andere Ende des Griffriemens an der Abdeckung am anderen Ende in Vorwärts/Rückwärtsrichtung befestigt ist.

12. Bildaufnahmevorrichtung nach Anspruch 11, wobei:
ein vorderes Ende des Griffriemens an einem vorderen Ende der Abdeckung befestigt ist, während ein hinteres Ende hiervon an einem hinteren Ende des äußeren Gehäuses befestigt ist.

13. Bildaufnahmevorrichtung nach Anspruch 11, wobei:
ein vorderes Ende des Griffriemens an einem unteren vorderen Ende der Abdeckung befestigt ist, während ein hinteres Ende hiervon an einem unteren hinteren Ende des äußeren Gehäuses befestigt ist.

14. Bildaufnahmevorrichtung nach Anspruch 9, wobei:
das äußere Gehäuse eine Länge in Vorwärts/Rückwärts-Richtung sowie eine vertikale Höhe, die größer als eine Breite in Links/Rechts-Richtung ist, besitzt.

## Revendications

1. Appareil électronique (10) comprenant :
un boîtier extérieur (12) ;
une section de logement (26) prévue dans le boîtier extérieur et servant à loger de manière détachable un support d'enregistrement (2) en forme de disque ;
une section d'enregistrement / reproduction (56, 60) qui effectue l'enregistrement et / ou la reproduction de données sur / à partir du support d'enregistrement en forme de disque logé dans la section de logement ;
un capot d'ouverture / fermeture (27) prévu dans le boîtier extérieur de manière à pouvoir basculer entre une position fermée pour recouvrir la section de logement et une position ouverte pour découvrir la section de logement ; et
un mécanisme de verrouillage (86) configuré pour produire un état verrouillé dans lequel le capot est maintenu dans la position fermée et un état déverrouillé dans lequel le capot est autorisé à basculer de la position fermée dans la position ouverte ;
dans lequel le capot est pourvu d'un bras (88) sur une surface intérieure de celui-ci, le bras s'étendant, en passant par le centre du capot, vers des positions se faisant face mutuellement à la circonférence extérieure du capot ;
dans lequel le bras comporte, aux deux extrémités du bras dans la direction de longueur, deux mâchoires de verrouillage (8802, 8804) servant à produire l'état verrouillé en étant accouplées de manière libérable à la section de logement dans deux parties de celle-ci, qui sont situées à distance d'un centre de basculement axial du capot ; et
dans lequel le mécanisme de verrouillage est configuré pour comprendre le bras et les deux mâchoires de verrouillage.

2. Appareil électronique selon la revendication 1, dans lequel :
le bras s'étend le long de la surface intérieure du capot.

3. Appareil électronique selon la revendication 1, dans lequel :
dans l'état verrouillé maintenant le capot dans la position fermée, le bras s'étend dans une direction de diamètre du support d'enregistrement en forme de disque logé dans la section de logement.

4. Appareil électronique selon la revendication 1, dans lequel :
dans l'état verrouillé maintenant le capot dans la position fermée, le bras s'étend parallèlement au centre de basculement axial du capot.

5. Appareil électronique selon la revendication 1, dans lequel :
le boîtier extérieur est pourvu d'un actionneur (90) qui amène le mécanisme de verrouillage à produire l'état verrouillé et l'état déverrouillé par le basculement du bras.

6. Appareil électronique selon la revendication 1, dans lequel :
les mâchoires de verrouillage accouplées de manière libérable à la section de logement dans ses deux parties situées à distance du centre de basculement axial (2702) du capot dans l'état verrouillé sont une première mâchoire de verrouillage et une deuxième mâchoire de verrouillage ;
le boîtier extérieur est pourvu d'un actionneur qui amène le mécanisme de verrouillage à produire l'état verrouillé et l'état déverrouillé par le basculement du bras et la mise en prise / séparation d'une section de mise en prise avec / de la première mâchoire de verrouillage ;
l'état verrouillé est produit, dans un premier état de basculement du bras, par la mise en prise de la section de mise en prise avec la première mâchoire de verrouillage (8802) et par la mise en prise d'une paroi de mise en prise prévue dans le boîtier extérieur avec la deuxième mâchoire de verrouillage (8804) ; et
l'état déverrouillé est produit, dans un deuxième état de basculement du bras, par la séparation de la première mâchoire de verrouillage de la section de mise en prise et par la séparation de la deuxième mâchoire de verrouillage de la paroi de mise en prise prévue dans le boîtier extérieur.

7. Appareil électronique selon la revendication 1, dans lequel :
les mâchoires de verrouillage accouplées de manière libérable à la section de logement dans ses deux parties situées à distance du centre de basculement axial du capot dans l'état verrouillé sont une première mâchoire de verrouillage et une deuxième mâchoire de verrouillage ;
le boîtier extérieur est pourvu d'un actionneur qui amène le mécanisme de verrouillage à produire l'état verrouillé et l'état déverrouillé par le basculement du bras et la mise en prise / séparation d'une section de mise en prise avec / de la première mâchoire de verrouillage ;
l'état verrouillé est produit, dans un premier état de basculement du bras, par la mise en prise de la section de mise en prise avec la première mâchoire de verrouillage et par la mise en prise d'une paroi de mise en prise prévue dans le boîtier extérieur avec la deuxième mâchoire de verrouillage ;
l'état déverrouillé est produit, dans un deuxième état de basculement du bras, par la séparation de la première mâchoire de verrouillage de la section de mise en prise et par la séparation de la deuxième mâchoire de verrouillage de la paroi de mise en prise prévue dans le boîtier extérieur ; et
un état intermédiaire entre l'état verrouillé et l'état déverrouillé est produit, dans le deuxième état de basculement du bras, par la mise en prise de la section de mise en prise avec la première mâchoire de verrouillage et par la séparation de la deuxième mâchoire de verrouillage de la paroi de mise en prise prévue dans le boîtier extérieur.

8. Appareil électronique selon la revendication 6 ou 7, dans lequel :
le bras est pourvu de moyens de forçage (8810) pour forcer le bras dans le deuxième état de basculement, et d'une butée (8814) servant à limiter le deuxième état de basculement du bras en venant en contact avec le bras.

9. Appareil électronique selon au moins l'une des revendications précédentes, dans lequel cet appareil est un appareil de prise d'image.

10. Appareil de prise d'image selon la revendication 9, dans lequel :
le centre de basculement axial s'étend dans une direction avant-arrière ; et
le bras s'étend dans la direction avant-arrière dans l'état verrouillé maintenant le capot dans la position fermée.

11. Appareil de prise d'image selon la revendication 9, comprenant en outre :
une sangle de préhension (28) disposée sur une surface extérieure du capot d'ouverture / fermeture (27) et s'étendant dans une direction avant-arrière, permettant de ce fait l'insertion de la paume de la main droite entre la sangle de préhension et une surface extérieure du capot à l'extérieur de celui-ci ; et
une extrémité de la sangle de préhension dans la direction avant-arrière est fixée à une extrémité du boîtier extérieur dans la direction avant-arrière, et l'autre extrémité de la sangle de préhension est fixée au capot à l'autre extrémité dans la direction avant-arrière.

12. Appareil de prise d'image selon la revendication 11, dans lequel :
une extrémité avant de la sangle de préhension est fixée à une extrémité avant du capot, une extrémité arrière de celle-ci étant fixée à une extrémité arrière du boîtier extérieur.

13. Appareil de prise d'image selon la revendication 11, dans lequel :
une extrémité avant de la sangle de préhension est fixée à une extrémité avant inférieure du capot, une extrémité arrière de celle-ci étant fixée à une extrémité arrière inférieure du boîtier extérieur.

14. Appareil de prise d'image selon la revendication 9, dans lequel :
le boîtier extérieur a une longueur dans la direction avant-arrière et une hauteur verticale dont les dimensions sont supérieures à une largeur dans la direction droite-gauche.
